Europäisches Patentamt

European Patent Office

Office européen des brevets

(19)

(11) EP 1 133 932 A1

(12) **EUROPEAN PATENT APPLICATION**

(43) Date of publication:
**19.09.2001 Bulletin 2001/38**

(51) Int Cl.7: **A23P 1/16**, A23G 3/00, A23G 9/02, A23L 3/52, A23L 1/39, A23L 1/40

(21) Application number: **00105522.7**

(22) Date of filing: **15.03.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **SOCIETE DES PRODUITS NESTLE S.A.**
**1800 Vevey (CH)**

(72) Inventors:
• **Wagner, Tom**
  **8152 Glattbrugg (CH)**
• **Weber, Harry**
  **8610 Uster (CH)**
• **Witschi, Friedrich**
  **8311 Brütten (CH)**

(54) **Process for making a culinary foamer in powder form**

(57) The present invention concerns a process for preparing a dried soluble culinary foamer powder. The process comprises preparing a concentrated culinary solution to provide a concentrated solution of a solid concentration above about 50% by weight; foaming the concentrated solution to an overrun of at least about 200% for providing a foamed solution; drying the foamed solution in a convection dryer for providing a dried foamed product and, comminuting the dried foamed product to soluble culinary foamer powder. The soluble culinary foamer powder is particular suitable in preparation of culinary products based on dry base powder such as dry sauce or sauce base which is brought to boiling when being prepared.

EP 1 133 932 A1

**Description**

Field of the Invention

This invention relates to a process for a dried soluble culinary foamer product and to soluble self-foaming product such as sauces and soups. The process is particularly suitable for producing culinary foamers, which contain high levels of carbohydrates.

Background to the Invention

Cook-up sauces and soups based on dry culinary base powders are well known. The dry culinary base powder is mixed into cold or hot water or milk and brought to boil and simmer for a couple of minutes. Examples of such cook-up sauces and soups are vegetable sauces and soups, sauce Béarnaise etc. None of these liquid culinary products are foamed.

Classical culinary foamed products are Sabayon (Zabaglione) and foamed sauces like Sauce Mousseline which is a variation of the Sauce Hollandaise foamed with whipped cream. For example, Sabayon is prepared by beating whole eggs, white wine and sugar in a water-bath until homogeneous foam is build. Another example is foamed Fish Sauce, which is prepared by beating or whipping fish fond and egg yolks until foam is build.

Dry mix foaming creamers are known for instant beverages like "Cappuccino". Most of these foaming creamers are spray-dried mixtures of fillers (carbohydrates), milk solids and lipids. In some cases part of the foam is generated with a chemical reaction with water and carbonate/bicarbonate salts. Dry mix foaming creamers are e.g. described in European Patent Application EP 088 566, European Patent Application EP 0796562, and International Patent Application WO 98/34495.

Dry mix foaming creamers are usually produced by spray-drying or freeze-drying concentrated base liquor. Normally, the base liquor has a solids concentration of about 20% to about 40% by weight. The concentrated liquor is usually spray-dried by spraying the concentrated liquor into a drying tower along with a drying gas; usually hot air. The air temperature and air flow rates are adjusted to give a desired level of moisture in the beverage powder produced. Usually this moisture level is selected to be less than about 10% by weight.

The concentrated liquor is usually freeze dried by first chilling the concentrated liquor to a slush and gassing it. The gassed concentrate is then frozen. The frozen liquor is then comminuted to particles. The particles are then transferred to a vacuum dryer where frozen water in the particles is caused to sublime. Again the final moisture level is usually selected to be less than about 10% by weight.

Freeze dried foaming agents for a soup base is known for example from Japanese Patents Application JP 03007563. In this patent application the foaming agent is added to the soup base, frozen and freeze dried under vacuum.

However, freeze-drying as discussed above is an expensive unit operation.

The known dry mix foaming creamers are instant creamers which when mixed with hot water or milk will almost instantaneous create a foam on the surface of the beverage. This renders the foaming creamers little suitable for dry mixes for foamed sauces and soups as these products normally will need to be cooked up in boiling water. Further, the foam is usually generated on the top of the beverage to provide a foamed beverage product such as cappuccino as the gas bubbles have a low much density compared with the surrounding liquid. This also makes the foaming creamers little suitable for dry mixes for foamed sauces and soups as evenly distributed foam in the product is usually desirable.

Therefore there is still a need for a process of providing dried culinary foamed products such as dry sauces and soups without the need for expensive freeze-drying unit operations. Further there is a need for a dried culinary foamed product with an ability to be cooked-up with boiling water and have a high degree of foam evenly distributed throughout the final product, as well as a process for providing these products.

Summary of the Invention

Accordingly, in one aspect, the invention provides a process for preparing a dried soluble culinary foamer powder. The process comprises:

preparing a concentrated culinary solution to provide a concentrated solution of a solid concentration above about 50% by weight;
foaming the concentrated solution to an overrun of at least about 200% for providing a foamed solution;
drying the foamed solution in a convection dryer foam for providing a dried foamed product and,
comminuting the dried foamed product to soluble culinary foamer powder.

It is surprisingly found that the process according to the invention is able to produce a dried soluble culinary foamer powder that has good solubility and at a reduced operating cost. The process allows a rapid drying of the dried soluble culinary foamer powder.

The dried soluble culinary foamer powder obtained according to the invention provides the combined advantages of the convenience of fast preparation and the added value of a creamy and foamy texture of classical culinary preparations. The culinary product can be prepared without having to be mechanically beaten or whipped to obtain a creamy and foamy structure. Another advantage is the light texture obtained with the high gas bubble volume in the sauces. For example, with e.g. 150 ml of liquid (water or water/milk) a sauce of 250 ml volume may be prepared.

Another advantage of the present invention is that the foam bubbles are homogeneously distributed in the liquid culinary product after the preparation. The creaming or floating of the gas bubbles at the top may be avoided due to the size of the bubbles (e.g. < lmm) and an increased viscosity of the surrounding liquid (thickening agents) after cooking.

A further advantage is that the soluble culinary foamer powder may be prepared without egg. Egg ingredients are often expensive and influence the taste of the final liquid product. The soluble culinary foamer powder has a neutral taste, which has very little influence on the taste of the final liquid product.

Preparation of the concentrated culinary solution may preferably be done by preparing a concentrated solution of a solids concentration above 50%, preferably in the range of about 60% to about 85%, and more preferably in the range of about 65% to about 80% solids by weight.

The concentrated solution is foamed to an overrun of at least 200%, preferably foamed to an overrun in the range of about 250% to about 800%, more preferably above about 300% and most preferably in the range about 350% to about 500% overrun. The actual overrun used will depend on the desired final bulk density of the dry powder. Foams with these levels of overrun will have bubble sizes of about 5 μm to about 200 μm in diameter in the dried powder. A preferred bubble size has been found to be in the range of about 10 - 100 μm.

It has been found that with a concentrated culinary solution of a solids concentration above about 50% by weight it is usually not necessary to stabilise foamed concentrate before drying it. The foam structure is rigid enough to bear its own weight and does not collapse.

It has been found that it is particular advantageous t dry the foamed concentrated solution in a convection dryer. The concentrated solution can be effectively dried in a conventional batch or continuously working convection dryer. Quick drying is possible in foams due to a large surface area for water evaporation and easy movement of water by capillary action. Also, due to the foamed structure of the dried product, the rehydration occurs faster than products dried by other methods.

It is found that the soluble foamed culinary powder, due to controlled porosity, has an improved solubility. In common with the particles of powders produced by spray-drying, freeze-drying and extrusion processes the particles of this invention are substantially homogeneous in relation to their density.

The soluble culinary foamer powder has the advantage that it can be combined with various products such as dry culinary base e.g. dry sauce or soup bases. The amount of the foamer powder can be varied to provide a final product which different degree of foaming. The soluble culinary foamer product may also be used in connection with other dry bases such as instant dessert powders and sauce binders in kitchen applications.

An additional advantage of the soluble culinary foamer is that it provides bubbles in the final product which are evenly distributed and which have a diameter below 1.5 mm.

In another aspect, this invention provides a process for providing a liquid foamed culinary product such as a foamed sauce or soup. The process comprises

> providing a soluble culinary foamer powder according to the process described above, a culinary base, and a liquid,
> mixing the foamer powder, the culinary base and the liquid to a wetted culinary product mix,
> heating the wetted culinary product mix to boiling temperature to allow gas entrapped in the soluble culinary foamer to be released so and to provide a substantially evenly foamed culinary product.

The invention also relates to a soluble culinary foamed powder which when mixed with a liquid and brought to boiling provides a foamed culinary product with substantially evenly distributed bubbles below 1.5 mm.

Detailed Description of Preferred Embodiments of the Invention

Embodiments of the invention are now described, by way of example only.

In this specification, the term "overrun" means the ratio of the weight of a given volume of solution minus the weight of the same volume of foam, divided by the weight of foam of the same volume, expressed as %.

$$Overrun = \frac{(W_{solution} - W_{foam})}{W_{foam}} 100$$

The invention provides culinary foamer powder which is made up of particles or dried shapes having a unique internal texture and which are soluble. The foamer powder is produced by a process, which comprises foaming highly concentrated culinary solution to high overruns. The foamed concentrated solution are then dried but need much less drying than less concentrated solutions. Therefore the operational costs associated with drying may be reduced, and less expensive techniques than vacuum drying or freeze-drying can be used.

The drying of the concentrated foamed solution takes place in a convention dryer. The foamed concentrate can be effectively dried in a conventional batch or continuously working convection dryer. Quick drying is possible in foams due to a large surface area for water evaporation and easy movement of water by capillary action. Also, due to the foamed structure of the dried product, the rehydration occurs faster than products dried by other methods.

The drying at atmospheric pressure is less costly compared to freeze-drying. In freeze-drying the solution has to be frozen and the pressure in the drying chamber has to be lowered below the triple point of water in order to sublime the water from the product. The product dried on the screen of the convection dryer can easily be ground down to the desired particle sizes depending on the product specifications. No further agglomeration step is required for the production of a culinary foamer.

One of the initial steps in the process is the preparation of a concentrated solution. The concentrated solution is prepared in a feed tank with a stirring device. The dry ingredients are mixed with water and stirred for several minutes till the solution is homogeneous.

The concentrated solution is then subjected to foaming. In order for the final product to be sufficiently soluble and easily and economically dried, the concentrated extract should be foamed to an overrun of at least 200%. For example, the concentrated extract may be preferably foamed to an overrun above 250% and more preferably in the range 350 to 800% overrun, the actual overrun used will depend on the desired final bulk density of the dry powder. In order to obtain this level of foaming in a concentrated extract containing at least 50% by weight of solids, it has been found that the foaming is best carried out above room temperature and at high pressure in a rotor/stator foam processor. The preferable range of temperatures depends on the solids content of the liquor and its viscosity, and will be in the range 20°C to 120°C. The preferable range of pressures, for foaming will depend on the final overrun and bubble size that is desired, and will be in the range of 1 to 60 bars (0.1 MPa to 6 MPa) pressure. A preferred temperature range is from about 40°C to about 80°C and a preferred pressure range is from about 0.5 to 4Mpa.

Foam processors of this nature are commercially available. Suitable foam processors may be obtained from Kinematica AG of Lucerne, Switzerland under the trade name MEGATRON. The foam processor internal geometry comprises a tubular stator, which has a set of teeth in its bore. The rotor, which rotates in the bore of the stator, has a complementary set of teeth. The gap between the teeth of the rotor and those of the stator can be set in the range of 0.1 mm to 5 mm. Another feature of this foam processor is the small internal volume and good cooling of the foam due to a surrounding cooling jacket, which minimises the specific mechanical energy required for foaming, and limits the temperature rise in the foam during the foaming.

It is desired that the final bulk density is bulk density of about 50 to about 400 g/l and a solid concentration above about 90%. The density of the soluble culinary foamer powder can be adjusted to the amount of foamer added to the base mix in order to avoid de-mixing in the container and to control the final density of the final product. The culinary powder is dried to a solids content above 90% make it shelf-stable at room temperature. Food powder with low water contents have low water activity and therefore are more stable against quality losses like browning reactions, microbiological spoilage and caking or stickiness structure losses.

A foaming gas is injected into the concentrated solution, which then passes into the high shear field generated between the teeth of the rotor and stator. The concentrated solution is then highly foamed with the foam being formed of bubbles of size less than about 200 μm, at atmospheric pressure; the bubble size in the foam processor will be smaller by the ratio of the pressure in the foam processor to atmospheric pressure. For example, if the bubble size after expansion is 100μm, and the foaming pressure is 10 bars, the foam bubble size generated in the foam processor will be 4μm.

The foaming gas that is used to foam the concentrated solution may be any suitable gas; for example air, nitrogen and carbon dioxide. For culinary foamer powders, which are damaged by oxygen, inert gases such as nitrogen and carbon dioxide are preferred. The foam bubble size also depends on the gas used. Nitrogen gas results in much smaller bubble size than carbon dioxide gas, and mixtures of these gases can be used to control bubble size. The addition of oxygen may lead to a loss of colour and oxidative degradation of fats and flavours, and should thus be avoided.

The foam processor is preferably operated at pressures above atmospheric pressure, 0. 1Mpa, and preferably above 0.2Mpa. More preferably the pressure is in the range of 0.5 to 4Mpa.

It has been found that the foam may be treated in a manner usual for soluble powder production. Thus, if desired, it is possible to form the foamed extract into thin sheets, strips or rods prior to the drying operations on the foam. This will facilitate later comminuting operations, if these are necessary. This is conveniently done by forcing the foamed concentrated solution through a suitable orifice; for example an extrusion die. The thin sheets, strips or rods preferably have dimensions close to the desired final soluble powder particle dimensions that is, in a range of 0.1 to 4 mm and preferably in a range of 1 to 3 mm.

It has been found that the foamed concentrated solution according to the invention is rigid enough to without stabilisation to be dried successfully with out losing the unique internal foam texture/structure and the desired porosity/overrun that were generated during the foaming operation.

Nevertheless, for some applications it may be desirable to add suitable stabilisers to the concentrated solution or foam to stabilise or assist in stabilising it; such as food-grade surfactants or proteins that have this functionality. The stabilisers are conveniently added to the concentrated solution immediately prior to foaming. This addition of stabilisers or known foam enhancers is of interest when the culinary preparation contains foam de-stabilising ingredients like fats or oils.

Due to the high initial solids content of the concentrated solution the amount of water that must be removed during the drying step has been very significantly reduced. This may result in a significant reduction in drying unit operation costs, as well as making possible the use of less expensive techniques than vacuum drying or freeze-drying.

The drying is preferably done in a convection dryer as described above. The product can be dryer on commercial tray convection dryers, where the trays have perforated plates in stacks. The drying air flows at constant temperature and velocity parallel or perpendicular to the product containing trays. The product can also be dried in continuous and perforated belt type dryers where the drying air can be blown perpendicular to the product form the top or from the bottom of the belt. The drying air temperature can be in the range from 50 to 120°C and the drying time from 30 to 90 minutes. Suitable dryers are batch dryers from Afrem, France, and continuous dryers from Büttner-Schilde-Haas (BSH), Germany.

It is desirable that in drying to soluble product, the particles or shapes should substantially retain their foaming properties and its porosity/overrun that were generated during the foaming operation. The bubble size and overrun as well as the controlled porosity generated during the foaming and stabilising processes described above may aid substantially in the efficiency of the drying operations.

The dried foam may then be subjected to comminuting. This may be accomplished by breaking the foam into pieces of a relative large size and then grinding the pieces. The unit operations conventionally used to break up frozen concentrate in freeze-drying operations may also be used to comminute the dried foam. The dried foam is preferably comminuted to a particle size of about 0.5 mm to about 3 mm and more preferably from 0.4 to 2.5mm. The particles obtained from the comminuting operation and are then processed and packed in the usual manner.

The dried soluble base powder may be mixed with any suitable culinary product dried or liquid, which need to be foamed. The dried soluble base powder is conveniently combined with dry culinary base such as dry sauce or soup base. The dry culinary base may be provided by any suitable process for making such products. For example dry culinary bases are products comprising ingredients such as starches and modified starches. Preferably the dry culinary base comprises also spices, flavours, salt, flavour enhancers like mono-sodium-glutamate and garnishes or a combination thereof. These ingredients are conveniently dried mixed to provide a dry culinary base product.

The culinary foamer powder advantageously comprises carbohydrates and foaming agents. Preferably the culinary foamer comprises high amounts starches and modified starches e.g. dextrin. Preferably the amount of carbohydrates is from about 70 to about 90 % by weight, a more preferred range is from about 75% to about 85%. For a preferred preparation the maltodextrin content of the dry matter is in the range from about 70 to about 90 % by weight, a more preferred range is from about 75% to about 85%. A preferred foaming agent is foamable protein. Advantageous the foamable protein is comprised in an amount from 5% to about 20%, preferably below 15%. A preferred foaming agent is the milk protein. It has been found that a foamer powder based on milk protein is particular suitable for the culinary application. Advantageously the content of the stabiliser is below about 15% of the total weight of the dry foamer ingredient. Other foaming agents such as egg protein can also be used. However, egg protein a less desirable choice as it is usually more expensive and may effect the taste of the product. Which means that the recipe of the product to be foamed will need to be adapted to e.g. mask the taste of the foamer. The foamer according to the invention has been found to be particular suitable for foaming culinary products as may have litter or no influence on the taste of the final product.

Specific examples are now described to further illustrate the invention.

Example 1 - Preparation of the dried soluble foamer powder

A concentrated culinary solution is made from 8.5 kg of Maltodextrose DE 19 (Malto-Dextrin Glucidex IT 19, Roquette Freres, France) and 1.5 kg of Caseinate (Na-Kaseinate, Emmi Milch AG, Switzerland) which are dissolved with water to a dry matter content of about 70% of the total weight.

The concentrated foamer solution is heated to 50°C and stirred for 1 hour. The concentrated foamer solution is foamed in a foaming/whipping mixer (Megatron, Kinematica AG, Switzerland) to provide a foamed solution. The rotor is rotating at 1200 rpm.

The foamed is extruded through a die to 2-4 mm thick rods. The rods are then dried in a convection dryer for 1 hour (temperature 60 to 80°C) to a dry matter content of 94-96 % of the total weight to provide a dried foamed rods.

The dried foamed rods are milled and sieved to a dried soluble foamer powder with a particle size between 0.4-2 mm. The powder has a tap density of 150 g /liter.

The dried soluble culinary foamer is either packed separately or it is mixed with a dry culinary base ingredient and then packed.

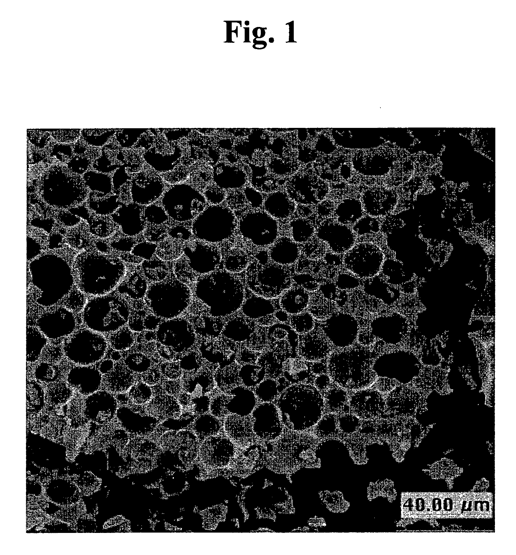

A dried soluble culinary foamer powder prepared in accordance with example 1 is shown in Fig. 1. As can be seen from the Figure the foamer ingredient is based on physical entrapment of the gas. The gas bubbles are evenly distributed in the powder particle.

Example 2 - preparation of a foamed sauce

Foaming cook-up sauces are prepared from a dry mix of culinary base ingredients and the culinary foaming powder prepared according to example 1.

The soluble culinary foamer powder and the sauce base powder are thrown into cold water or water/milk mix. The wetted mix is stirred well and heated for at least 1 minute and brought to boil. The gas entrapped in the soluble culinary foamer is released and a foamed sauce is provided. The sauce is taken away from the heat and is ready to be served.

The so prepared sauce shows a foamy texture with homogeneously distributed gas bubbles throughout the whole product.

Example 3 - preparation of a foamed sauce

Self foaming sauce with wild herbs is prepared as follows:

30 grams of the dry sauce base is containing the following ingredients:

| Starches and modified starches | 30.5 % |
|---|---|
| Spices and flavours | 4.5 % |
| Sugar | 3 % |
| Salt | 4.5 % |
| Mono-sodium-glutamate | 6 % |
| Skimmed milk powder | 45 % |
| Garnishes | 6.5 % |

To this dry base, 15 grams of the culinary foaming powder prepared according to example 1 is added. This mix is stirred into 150 ml of cold water to provide a wetted mix. The wetted mix is heated to boil for one to two minutes (butter added at the end) to provide a foamed sauce. The foamed sauce is poured into graduated measuring cylinders with a diameter of 5 cm.

The foamed sauce has a volume between 250 and 270 ml. After three minutes the volume is between about between 230 and 250 ml.

The foam quality is evaluated by a group of trained Food specialists by its appearance and by spooning. The sauce shows no white spots/specks, moreover the foam and the garnishes are evenly distributed throughout the whole sauce. The prepared sauce shows a light, foamy and creamy texture and an appealing appearance.

The final volume depends mainly on the recipe. Some recipes have a higher foam volume other some less end volume. It is also dependent of the way the sauce is prepared. If the wetted mix is stirred too much foam is lost, if the sauce is cooked for too long e.g. more than 2 minutes the foam volume is also somewhat reduced.

Example 4 - preparation of a foamed sauce

Self foaming sauce with seafood is prepared as follows:

31 grams of the dry sauce base is containing the following ingredients:

| Starches and modified starches | 31 % |
|---|---|
| Spices and flavours | 9 % |
| White Wine Powder | 9 % |
| Salt | 6 % |
| Mono-sodium-glutamate | 3 % |
| Skimmed milk powder | 42 % |

To this dry base, 15 grams of the soluble culinary foaming powder prepared according to example 1 is added. This mix is stirred into 150 ml of cold water to provide a wetted mix. The wetted mix is cooked for one to two minutes (butter added at the end) and a foamed sauce is obtained. The foamed sauce is poured into graduated measuring cylinders with a diameter of 5 cm.

The foamed sauce has a volume between 250 and 300 ml. After three minutes the volume is between 230 and 250 ml.

The foam quality is evaluated by a group of trained Food specialists by its appearance and by spooning. The sauce shows no white spots/specks and the foam is evenly distributed throughout the whole sauce. The prepared sauce shows a light, foamy and creamy texture and an appealing appearance.

Example 5 - The effect of the amount of soluble culinary foamer on the product volume

An advantage of the soluble foamer powder of the invention is that when preparing a liquid culinary product the amount of foam in the product can be controlled by the quantity of foamer added to the dry culinary base. Sauce base with different amounts of soluble culinary foamer powder is shown in Table 1.

The sauce is prepared as follow: 30 g of dry sauce base and different amounts of soluble culinary foamer powder (5, 10, 15, 20 and 25 g) are stirred into 150 ml cold water to provide wetted mixes. The wetted mixes are cooked for one minute and the poured into graduated measuring cylinders with a diameter or 5 cm. The sauce volume was measured after pouring and 3 min later.

The example shows that the product according to the inventions have good foam stability. Furthermore, the bubbles in the foam have been found to be evenly distributed in the product after 5 minutes. Also it has been found that the end product has a water-bath stability at 80°C for 3 hours or longer. This makes the product particular suitable for food service applications.

Table 1:

| Sauce volume after preparation and after 3 min waiting time as a function of the added culinary foamer powder | | | | |
|---|---|---|---|---|
| Amount of foamer powder in grams | 5 | 10 | 15 | 20 |
| Initial volume in ml | 195 | 230 | 260 | 300 |
| Volume after 3 minutes in ml | 180 | 205 | 225 | 255 |

**Claims**

1.   A process for preparing a dried soluble culinary foamer powder, the process comprising:

preparing a concentrated culinary solution to provide a concentrated solution of a solid concentration above about 50% by weight;
foaming the concentrated solution to an overrun of at least about 200% for providing a foamed solution;
drying the foamed solution in a convection dryer for providing a dried foamed product and,
comminuting the dried foamed product to soluble culinary foamer powder.

2.   A process according to claim 1, in which the solution has a solid concentration of about 60 to about 85% by weight.

3.   A process according to any of claims 1 and 2, in which the concentrated solution comprises from about 75 to about 95 % carbohydrates by weight of solid matter.

4. A process according to any of the claims 1 to 3, in which the concentrated solution comprises from about 5% to about 20% foamable protein by weight of solid matter.

5. A process according to claims land 4, in which the soluble culinary powder has a bulk density of about 50 to about 400 g/l and a solid concentration above about 90%.

6. A process according to claims 1 and 5, in which the concentrated solution is prepared by mixing ingredients in powder state with water to provide a concentrated liquor of a solids concentration of about 60% to about 85% by weight.

7. A process according to any of claim 1 to 6, in which the concentrated liquor is foamed to an overrun of about 250% to about 800%.

8. A process according to any of claims 1 to 7, in which overrun is 250 to 500%.

9. A process according to any of claims 1 to 8 in which the foamed solution is stabilised by incorporation a foam stabilising ingredient.

10. A process according to claims 1 to 9, in which the foaming of the concentrated solution is carried out in a rotor/ stator foam processor.

11. A process for providing a liquid foamed culinary product such as a foamed sauce or soup; the process comprising

providing a soluble culinary foamer powder according to the process of any of the proceeding claims, a culinary base, and a liquid,
mixing the foamer powder, the culinary base and the liquid to a wetted culinary product mix,
heating the wetted culinary product mix to boiling temperature to allow gas entrapped in the soluble culinary foamer to be released so and to provide a substantially evenly foamed culinary product.

12. A soluble culinary foamed powder which when mixed with a liquid and brought to boiling provides a foamed culinary product with substantially evenly distributed bubbles below 1.5 mm.

# Fig. 1

40.00 µm

European Patent
Office

**EUROPEAN SEARCH REPORT**

Application Number

EP 00 10 5522

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 97 25882 A (MASPEX SPOCKA Z O O ;STUGLIK ZDZISDAW (PL)) 24 July 1997 (1997-07-24) * page 3, line 1 - page 4, line 11; example 1 * * page 5, line 6 - line 8 * --- | 1,3-5, 7-9,11, 12 | A23P1/16 A23G3/00 A23G9/02 A23L3/52 A23L1/39 A23L1/40 |
| X | US 4 746 527 A (KUYPERS THEO W) 24 May 1988 (1988-05-24) * column 2, line 11 - line 32; claim 1; example 1 * * column 1, line 34 - line 40 * * column 2, line 67 - column 3, line 2 * --- | 1-9,11, 12 | |
| X | EP 0 579 328 A (CAMPINA MELKUNIE BV) 19 January 1994 (1994-01-19) * column 2, line 25 - line 28; claims 1,7,11; examples 1,2 * * page 2, line 5 - line 15 * * page 2, line 48 - page 3, line 15 * --- | 1,3-5, 7-9,11, 12 | |
| X | US 4 438 147 A (HEDRICK JR PAUL L) 20 March 1984 (1984-03-20) * column 4, line 12 - line 62; claims 1,27; examples 1-5 * * column 5, line 6 - column 6, line 28 * --- | 1,3-5, 7-11 | TECHNICAL FIELDS SEARCHED (Int.Cl.7) A23C A23F A23P A23L |
| A | GB 1 430 639 A (ABBOTT LAB) 31 March 1976 (1976-03-31) * page 3, line 20 - line 36 * * page 1, line 77 - line 84 * --- | 1 | |
| A | EP 0 756 844 A (JACOBS SUCHARD AG) 5 February 1997 (1997-02-05) --- | | |
| A | EP 0 458 310 A (JACOBS SUCHARD AG) 27 November 1991 (1991-11-27) --- | | |

-/--

The present search report has been drawn up for all claims

| Place of search | Date of completion of the search | Examiner |
|---|---|---|
| THE HAGUE | 21 August 2000 | Guyon, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................................
& : member of the same patent family, corresponding document

EPO FORM 1503 03.82 (P04C01)

| | European Patent Office | EUROPEAN SEARCH REPORT | Application Number |
|---|---|---|---|
| | | | EP 00 10 5522 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 813 815 A (KRAFT FOODS INC) 29 December 1997 (1997-12-29) * examples 1-3,6 * | 1,2,6-9, 11,12 | |
| A | EP 0 521 543 A (UNILEVER NV ;UNILEVER PLC (GB)) 7 January 1993 (1993-01-07) | | |
| A | US 3 031 312 A (A L MORGAN ET AL.) 24 April 1962 (1962-04-24) | | |
| A | US 3 170 803 A (A L MORGAN ET AL.) 23 February 1965 (1965-02-23) | | |

TECHNICAL FIELDS
SEARCHED      (Int.Cl.7)

The present search report has been drawn up for all claims

| Place of search | Date of completion of the search | Examiner |
|---|---|---|
| THE HAGUE | 21 August 2000 | Guyon, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 10 5522

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2000

| Patent document cited in search report | | Publication date | Patent family member(s) | | Publication date |
|---|---|---|---|---|---|
| WO 9725882 | A | 24-07-1997 | PL | 312363 A | 21-07-1997 |
| | | | CZ | 9802216 A | 11-11-1998 |
| | | | EP | 0874557 A | 04-11-1998 |
| | | | HU | 9901891 A | 28-09-1999 |
| US 4746527 | A | 24-05-1988 | AT | 36112 T | 15-08-1988 |
| | | | AU | 576552 B | 01-09-1988 |
| | | | AU | 3845685 A | 29-08-1985 |
| | | | CA | 1222410 A | 02-06-1987 |
| | | | DE | 3564071 D | 08-09-1988 |
| | | | EP | 0154192 A | 11-09-1985 |
| | | | ES | 540505 D | 01-12-1985 |
| | | | ES | 8602361 A | 16-03-1986 |
| | | | GB | 2154422 A,B | 11-09-1985 |
| | | | GR | 850401 A | 14-06-1985 |
| | | | IE | 55934 B | 27-02-1991 |
| | | | IN | 163753 A | 05-11-1988 |
| | | | JP | 1648641 C | 13-03-1992 |
| | | | JP | 3013857 B | 25-02-1991 |
| | | | JP | 60196148 A | 04-10-1985 |
| | | | KR | 8903697 B | 30-09-1989 |
| | | | MX | 164783 B | 23-09-1992 |
| | | | NO | 850654 A,B, | 21-08-1985 |
| | | | NZ | 211046 A | 28-10-1988 |
| | | | PH | 21353 A | 15-10-1987 |
| | | | PT | 79986 A,B | 01-03-1985 |
| | | | SG | 22888 G | 30-09-1988 |
| | | | US | 4748040 A | 31-05-1988 |
| | | | ZA | 8500873 A | 25-09-1985 |
| EP 0579328 | A | 19-01-1994 | NL | 9201264 A | 01-02-1994 |
| | | | AT | 132704 T | 15-01-1996 |
| | | | CA | 2100032 A | 15-01-1994 |
| | | | DE | 69301287 D | 22-02-1996 |
| | | | DE | 69301287 T | 18-07-1996 |
| | | | DK | 579328 T | 20-05-1996 |
| | | | ES | 2083820 T | 16-04-1996 |
| | | | US | 5462759 A | 31-10-1995 |
| US 4438147 | A | 20-03-1984 | JP | 59006838 A | 13-01-1984 |
| GB 1430639 | A | 31-03-1976 | NONE | | |
| EP 0756844 | A | 05-02-1997 | AT | 179579 T | 15-05-1999 |
| | | | CA | 2180419 A | 03-02-1997 |
| | | | DE | 69602319 D | 10-06-1999 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**     EP 00 10 5522

This annex lists the patent family members relating to the patent documents cited in the above–mentioned European search report.
The members are as contained in the European Patent Office EDP file on
The European Patent Office is in no way liable for these particulars which are merely given for the purpose of information.

21-08-2000

| Patent document cited in search report | | Publication date | Patent family member(s) | | Publication date |
|---|---|---|---|---|---|
| EP 0756844 | A | | DE | 69602319 T | 30-09-1999 |
| | | | ES | 2135172 T | 16-10-1999 |
| EP 0458310 | A | 27-11-1991 | DE | 4032537 A | 28-11-1991 |
| | | | AT | 110933 T | 15-09-1994 |
| | | | AU | 645566 B | 20-01-1994 |
| | | | AU | 7731591 A | 28-11-1991 |
| | | | CN | 1056800 A | 11-12-1991 |
| | | | DE | 59102806 D | 13-10-1994 |
| | | | DK | 458310 T | 27-03-1995 |
| | | | ES | 2063402 T | 01-01-1995 |
| | | | FI | 912524 A | 26-11-1991 |
| | | | JP | 5123103 A | 21-05-1993 |
| | | | NO | 911992 A | 26-11-1991 |
| EP 0813815 | A | 29-12-1997 | CA | 2205773 A | 21-12-1997 |
| | | | CN | 1170542 A | 21-01-1998 |
| | | | HU | 9701077 A | 30-03-1998 |
| | | | JP | 10066531 A | 10-03-1998 |
| | | | PL | 320653 A | 22-12-1997 |
| EP 0521543 | A | 07-01-1993 | AT | 149295 T | 15-03-1997 |
| | | | AU | 670747 B | 01-08-1996 |
| | | | AU | 1901092 A | 08-01-1993 |
| | | | BR | 9206083 A | 02-08-1994 |
| | | | CA | 2110493 A | 10-12-1992 |
| | | | CZ | 9302628 A | 13-04-1994 |
| | | | DE | 69217745 D | 10-04-1997 |
| | | | DE | 69217745 T | 14-08-1997 |
| | | | DK | 521543 T | 25-08-1997 |
| | | | WO | 9221255 A | 10-12-1992 |
| | | | ES | 2100267 T | 16-06-1997 |
| | | | FI | 935420 A | 03-12-1993 |
| | | | GR | 3023488 T | 29-08-1997 |
| | | | HU | 71283 A | 28-11-1995 |
| | | | JP | 6507831 T | 08-09-1994 |
| | | | NO | 934385 A | 02-02-1994 |
| | | | NZ | 242980 A | 26-07-1995 |
| | | | SK | 135393 A | 11-05-1994 |
| US 3031312 | A | 24-04-1962 | NONE | | |
| US 3170803 | A | 23-02-1965 | NONE | | |

EPO FORM P0459

For more details about this annex : see Official Journal of the European Patent Office, No. 12/82

13